## Europäisches Patentamt
## European Patent Office
## Office européen des brevets

(19)

(11) Veröffentlichungsnummer : **0 093 877**
**B1**

(12)

# EUROPÄISCHE PATENTSCHRIFT

(45) Veröffentlichungstag der Patentschrift : **12.02.86**

(21) Anmeldenummer : **83103446.7**

(22) Anmeldetag : **08.04.83**

(51) Int. Cl.⁴ : **F 27 B 9/24**, F 27 D 5/00

(54) **Vorrichtung zur Wärmebehandlung von stückigem Gut bei hoher Temperatur.**

(30) Priorität : **06.05.82 DE 3217076**

(43) Veröffentlichungstag der Anmeldung :
**16.11.83 Patentblatt 83/46**

(45) Bekanntmachung des Hinweises auf die Patenterteilung : **12.02.86 Patentblatt 86/07**

(84) Benannte Vertragsstaaten :
**AT BE CH DE FR GB IT LI LU NL SE**

(56) Entgegenhaltungen :
**CH-A- 346 472**
**DE-B- 1 147 162**
**DE-B- 1 433 870**
**FR-A- 422 561**
**GB-A- 250 732**
**GB-A- 2 018 962**

(73) Patentinhaber : **AGROB ANLAGENBAU GMBH**
**Münchener Str. 101**
**D-8045 Ismaning (DE)**

(72) Erfinder : **Rumbach, Karl F., Dipl.-Ing.**
**Liesingstrasse 6**
**D-6450 Hanau 9 (DE)**

(74) Vertreter : **Tetzner, Volkmar, Dr.-Ing. Dr. Jur.**
**Van-Gogh-Strasse 3**
**D-8000 München 71 (DE)**

Jouve, 18, rue St-Denis, 75001 Paris, France

## Beschreibung

Die Erfindung betrifft eine Vorrichtung zur Wärmebehandlung von stückigem Gut bei hoher Temperatur, insbesondere zum Brennen von keramischem Gut, enthaltend einen Wärmebandlungsraum mit einer Anzahl von ortsfest angeordneten, zumindest teilweise angetriebenen, rotierenden Tragelementen und einer Anzahl von auf den Tragelementen aufliegenden, mit dem Gut durch den Wärmebehandlungsraum transportierten Auflageelementen.

Bei der folgenden Beschreibung der Erfindung wird als Anwendungsfall das Brennen von keramischem Gut gewählt. Die Erfindung beschränkt sich jedoch nicht auf dieses Anwendungsgebiet, sondern kann vorteilhaft auch bei der Wärmebehandlung von sonstigem stückigem Gut Verwendung finden, etwa beim Glühen und Tempern von metallischen Werkstücken sowie bei sonstigen Wärmebehandlungsprozessen hoher Temperatur.

Zum Brennen von keramischem Gut sind Rollenöfen bekannt, bei denen das Gut auf einer großen Anzahl von dicht aufeinanderfolgend angeordneten Rollen durch den tunnelartig ausgebildeten Ofen gefördert wird. Derartige Öfen sind mit wesentlichen Nachteilen behaftet. Um eine unzulässige Verformung der Rollen und des keramischen Gutes zu vermeiden, sind Länge und Durchmesser der Rollen und damit bei vorgegebener Durchlaufgeschwindigkeit auch die Kapazität des Ofens begrenzt. Durch die Vielzahl der benötigten angetriebenen Rollen ergibt sich ein hoher anlagentechnischer Aufwand. Bedingt durch die erforderliche dichte Anordnung der Trag- und Förderrollen ergibt sich ein ungleichmäßiger Zutritt des gasförmigen Heizmediums von unten und oben. Schließlich kann in derartigen Rollenöfen überglasiertes keramisches Material nicht gebrannt werden, da hierbei ein Verkleben und Verschmieren der Rollen unvermeidlich ist. Derartige Rollenöfen sind damit in der Qualität der Glasur des zu brennenden keramischen Gutes sehr beschränkt.

Es sind weiterhin Rollenöfen bekannt, bei denen das zu brennende keramische Gut nicht unmittelbar auf den angetriebenen Förderrollen, sondern auf einzelnen Tragplatten aufliegt, die sich ihrerseits auf den Förderrollen abstützen und von diesen durch den Ofen transportiert werden. Die Größe dieser Tragplatten entspricht hierbei mindestens der Grundfläche der keramischen Teile. Daraus ergibt sich als wesentlicher Nachteil eine schlechte Beheizung des zu brennenden Gutes von unten und damit eine insgesamt ungleichmäßige Wärmebehandlung des keramischen Gutes. Ungünstig ist ferner, daß das bei jedem Durchlauf erforderliche Aufheizen der erwähnten Tragplatten auf die hohe Brenntemperatur einen sehr großen Energieverbrauch bedingt, da die fühlbare Wärme dieser Brennhilfsmittel praktisch nicht zurückgewonnen werden kann. Nachteilig ist bei diesen bekannten Öfen auch die verhältnismäßig schlechte Führung der Tragplatten in Transportrichtung sowie die Gefahr eines Verklebens des keramischen Gutes auf den Tragplatten.

Zum Stand der Technik gehören schließlich auch Öfen, bei denen das zu brennende Keramische Gut auf einer Anzahl von parallel zueinander durch den tunnelartigen Ofenraum geführten Stahlsaiten ruht, die an den beiden Enden des Ofens über umlaufende Spann- und Transporträder geführt sind. Bei diesem Ofen ist zwar das Verhältnis zwischen der Masse der Brennhilfsmittel und der Masse des keramischen Gutes und damit der für die Aufheizung der Brennhilfsmittel erforderliche Energiebedarf bereits wesentlich verringert ; diese bekannte Ausführung ist jedoch mit wesentlichen anderen Nachteilen behaftet. Da der zur Unterstützung des keramischen Gutes verwendete Draht keine nennenswerte Eigensteifigkeit besitzt, muß eine Vielzahl von Unterstützungsrollen vorgesehen werden, und es sind ferner aufwendige Spannvorrichtungen für die einzelnen Stahlsaiten erforderlich. Im Hinblick auf die hohe Beanspruchung, der diese Stahlsaiten in mechanischer und thermischer Hinsicht ausgesetzt sind, treten im Betrieb immer wieder Drahtbrüche mit allen nachteiligen Folgeerscheinungen auf.

Der Erfindung liegt daher die Aufgabe zugrunde, unter Vermeidung der geschilderten Mängel der bekannten Ausführungen eine Vorrichtung zur Wärmebehandlung von stückigem Gut bei hoher Temperatur, insbesondere zum Brennen von keramischem Gut, zu schaffen, bei der die Wärmebehandlung des Gutes von allen Seiten (insbesondere von unten und oben) vergleichmäßigt und gleichzeitig der Energieverbrauch gesenkt sowie die Durchlaufzeit verkürzt wird, wobei jedoch in der Zone hoher Temperatur eine ausreichende Formbeständigkeit des Gutes gewährleistet ist. Ziel der Erfindung ist es ferner, die Vorrichtung so auszubilden, daß sie sich mit vergleichsweise niedrigen Anlagekosten herstellen und mit kleinen Betriebskosten betreiben läßt.

Diese Aufgabe wird erfindungsgemäß bei einer Vorrichtung mit dem Merkmal entsprechend dem Oberbegriff des Anspruches 1 durch die kennzeichnenden Merkmale a) und b) gelöst.

Da das Gut bei der erfindungsgemäßen Vorrichtung nur mit einem sehr geringen Teil seiner Grundfläche auf den Auflageprofilen aufliegt, ist ein gleichmäßiger Zutritt des Heizmediums zum Gut von allen Seiten möglich. Dadurch wird die Aufheizung des Gutes vergleichmäßigt und beschleunigt, was sich sowohl auf die Qualität der Wärmebehandlung als auch auf die Durchlaufzeit und den Energieverbrauch günstig auswirkt.

Da sich das keramische Gut auf den langgestreckten Auflageprofilen abstützt, die eine ausreichende Steifigkeit besitzen, kann die Zahl der ortsfest angeordneten, zumindest teilweise angetriebenen rotierenden Tragelemente im Vergleich zum Stand der Technik wesentlich verringert werden, was eine beachtliche Senkung der Anlagekosten mit sich bringt.

Die Ausbildung der Auflageelemente in Form einzelner langgestreckter Auflageprofile besitzt den weiteren Vorteil einer leichten Manipulierbarkeit für die notwendige Rückführung der Auflageelemente zur Eintrittsseite des Ofens.

Um in der Zone höchster Temperatur eine ausreichende Abstützung für das zu behandelnde Gut über die Auflageelemente zu erzielen, kann erfindungsgemäß in der Zone höchster Temperatur ein kleinerer Abstand der rotierenden Tragelemente (in Transportrichtung) als in den übrigen Zonen vorgesehen werden. Auf diese Weise wird mit einer minimalen Zahl von Tragelementen die notwendige Formbeständigkeit der Auflageelemente in allen Zonen des Ofens und damit auch die ausreichende Abstützung des Gutes in der Zone höchster Temperatur gewährleistet.

Eine andere Möglichkeit besteht darin, in der Zone höchster Temperatur eine gegenüber den übrigen Zonen vergrößerte Auflagelagefläche für das zu behandelnde Gut vorzusehen.

Bei einer Variante dieser Ausführung wird die Auflagefläche für das zu behandelnde Gut in der Zone höchster Temperatur ausschließlich durch rotierende Tragelemente im Bereich des lichten Abstandes zwischen benachbarten Auflageelementen gebildet. Werden beispielsweise zur Führung der Auflageelemente in Transportrichtung Führungsrillen in den Tragelementen vorgesehen, so wird bei dieser Variante die Tiefe der Führungsrillen im Bereich der Zone höchster Temperatur zweckmäßig größer und in den übrigen Zonen kleiner als die Höhe der Auflageelemente gewählt. Damit tragen dann in der Zone höchster Temperatur ausschließlich die rotierenden Tragelemente.

Bei einer zweiten Variante dieser Ausführung (mit in der Zone höchster Temperatur vergrößerter Auflagefläche) wird die Auflagefläche für das Gut in der Zone höchster Temperatur sowohl durch die Auflageelemente als auch durch die zwischen benachbarten Auflageelementen vorhandenen Umfangsbereiche der rotierenden Tragelemente gebildet.

Die vorstehend erläuterten zwei Varianten sind vor allem für Brenngut geeignet, das sich während des Brandes unter dem eigenen Gewicht außerhalb der von den Auflageelementen unterstützten Fläche im Bereich hoher Temperatur verformen kann. Dies gilt beispielsweise für den Einbrand keramischer Fliesen.

Für Brenngut, bei dem während des Brandes keine Verformung durch das Eigengewicht außerhalb der Auflagefläche entsteht (beispielsweise für den Zweit- und Drittbrand keramischer Fliesen), kann die Auflagefläche ausschließlich durch die Auflageelemente gebildet werden. Eine ausreichende Formsteifigkeit der Auflageelemente in der Zone höchster Temperatur wird in diesem Falle durch einen verringerten Abstand (in Transportrichtung) der rotierenden Tragelemente erreicht, auf denen sich die Auflageelemente abstützen.

Der lichte Abstand der Auflageelemente (quer zur Transportrichtung) beträgt zweckmäßig ein Mehrfaches der (quer zur Transportrichtung gemessenen) Breite der Auflageelemente. Damit liegt das keramische Gut zumindest in großen Teilen des Ofens nur mit einem Bruchteil seiner Grundfläche auf den Auflageelementen auf, und es wird — wie vorstehend erwähnt — im Bedarfsfalle lediglich in der Zone höchster Temperatur noch eine zusätzliche Auflagefläche (gebildet durch die rotierenden Tragelemente im Bereich des lichten Abstandes zwischen benachbarten Auflageelementen) geschaffen, um eine ausreichende Zeitstandfestigkeit von zur Verformung neigendem Material zu gewährleisten.

Die für die erfindungsgemäße Vorrichtung wesentliche Führung der Auflageelemente in Transportrichtung kann erfindungsgemäß durch ortsfeste Führungselemente erfolgen, die im Bereich zwischen in Transportrichtung aufeinanderfolgenden Tragelementen vorgesehen sind und deren Oberkante tiefer als die Oberkante der Auflageelemente liegt, so daß die ortsfesten Führungselemente nicht mit dem sich auf den Auflageelementen abstützenden keramischen Gut in Berührung kommen. Eine Führung der Auflageelemente kann ferner durch Führungsrillen in den Tragelementen erfolgen.

Wenn die Auflagefläche für das zu behandelnde Gut in der Zone höchster Temperatur ausschließlich durch rotierende Tragelemente gebildet wird, die im Bereich des lichten Abstandes zwischen benachbarten Auflageelementen vorgesehen sind, so werden erfindungsgemäß in dieser Zone wenigstens zwischen einzelnen, mit Führungsrillen versehenen Tragelementen Förderelemente zum Antrieb der Auflageelemente vorgesehen, wobei der Abstand aufeinanderfolgender Förderelemente höchstens gleich der halben Länge der Auflageelemente ist. Auf diese Weise stützt sich jedes Auflageelement auch im Bereich der Zone höchster Temperatur jeweils auf zwei Förderelementen ab.

Die Enden der Auflageelemente werden zweckmäßig als in Transportrichtung lose ineinanderschiebbare Steckverbindungsenden ausgebildet, die einer Durchbiegung entgegenwirken. Dies gewährleistet eine automatische Kupplung der Auflageelemente im Bereich der Eintrittsseite des Ofens und ein selbsttätiges Lösen aufeinanderfolgender Auflageelemente an der Austrittsseite. Zugleich ergibt sich durch die Steckverbindung ein formschlüssiger, durchbiegungssteifer Verbund der Auflageelemente.

Der lichte Abstand zwischen benachbarten Auflageelementen ist erfindungsgemäß zur Anpassung an die Breite des zu behandelnden Gutes zweckmäßig einstellbar. Dies kann entweder durch Querverteilung der für die Längsführung der Auflageelemente vorgesehenen Führungselemente erfolgen oder durch Verwendung einer für alle in Betracht kommenden Formate des zu behandelnden Gutes passende Anzahl fest angeordneter Führungselemente bzw. Führungsrillen.

Die Antriebsgeschwindigkeit der angetriebenen Tragelemente wird in den einzelnen Zonen der Wärmebehandlungsvorrichtung so gewählt, daß die Auflageelemente über die gesamte Länge des Wärmebehandlungsraumes unter einem in Transportrichtung wirkenden leichten Druck, und damit in kraftschlüssiger Verbindung stehen. Zu diesem Zweck ist es im allgemeinen angebracht, in den vorderen Zonen des Ofens eine etwas größere Antriebsgeschwindigkeit als in den hinteren Zonen zu wählen.

Zur Erzielung einer ausreichenden Kraftübertragung von den angetriebenen Tragelementen zu den Auflageelementen weisen die miteinander in Berührung kommenden Flächen der Auflageelemente und der angetriebenen Tragelemente zweckmäßig einen Reibbelag und/oder eine Formschluß-Profilierung auf, und zwar insbesondere in der Aufheizzone.

Quer zur Transportrichtung benachbarte Auflageelemente sind zweckmäßig in Transportrichtung unabhängig voneinander beweglich. Dies ermöglicht auch bei unterschiedlichen Wärmedehnungen eine spannungsfreie Bewegung der einzelnen Reihen von Auflageelementen durch den Ofen. Auch der Rücktransport der Auflageelemente vom Ofenende zum Ofenanfang wird dadurch vereinfacht. Im Rahmen der Erfindung ist es jedoch auch möglich, quer zur Transportrichtung benachbarte Auflageelemente durch Querstege zu gitterartigen, in Transportrichtung geführten Elementen zu verbinden.

An ihrer Oberseite können die Auflageelemente eine zur Abstützung und/oder zur Mitnahme des Gutes dienende Profilierung aufweisen. Besonders zweckmäßig sind durch Stifte oder ähnliche Elemente gebildete Vorsprünge, die in Ausnehmungen der Auflageelemente in wählbarer Lage eingesteckt werden.

Als Material für die Auflageelemente ist ein Werkstoff zu wählen, der in der Zone höchster Temperatur ausreichend formbeständig, korrosionsfest und verzunderungsfrei ist. Geeignet sind insbesondere Auflageelemente aus temperaturbeständiger Keramik, wie Siliziumcarbid und Porzellan, sowie aus Chrom-Nickel-Stahl, Chrom-Aluminium-Stahl und Chrom-Nickel-Aluminium-Titan-Stahl.

Die erfindungsgemäße Vorrichtung zur Wärmebehandlung wird im allgemeinen die Grundrißform eines langgestreckten Rechtecks aufweisen, wobei die Auflageelemente geradlinig geführt sind und von der Austrittsseite des Wärmebehandlungsraumes zur Eintrittsseite zurückgefördert werden. Im Rahmen der Erfindung ist es jedoch grundsätzlich auch möglich, dem Wärmebehandlungsraum die Grundrißform eines Kreisringes zu geben. Hierbei werden die Auflageelemente längs einer endlosen Kreisbahn geführt, wobei die Be- und Entladestation unmittelbar aneinander anschließen und sich ein Rücktransport der Auflageelemente zur Eintrittsseite des Wärmebehandlungsraumes erübrigt.

Die Erfindung ist in der Zeichnung schematisch veranschaulicht. Es zeigen

Figur 1 eine Schemadarstellung des in einem erfindungsgemäßen Ofen angeordneten Systems von Tragelementen und Auflageelementen ;

Figur 2 eine Aufsicht auf einen Ausschnitt des Trag- und Fördersystems ;

Figur 3 eine Seitenansicht des Teilstücks gemäß Fig. 2 ;

Figur 4 einen Schnitt durch ein Tragelement, das in der Zone höchster Temperatur zugleich die Auflagefläche für das keramische Gut bildet ;

Figur 5 einen Schnitt durch ein Tragelement, wobei das keramische Gut auf den langgestreckten Auflageprofilen ruht ;

Figur 6 eine Schemadarstellung der Steckverbindung aufeinanderfolgender Auflageelemente.

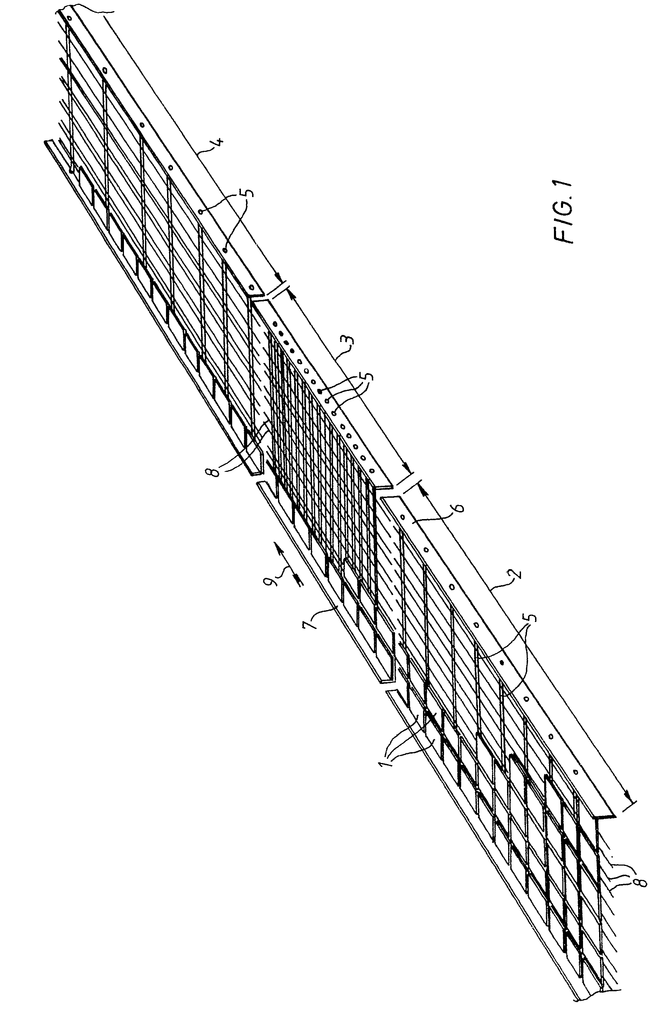

In Fig. 1 ist von dem erfindungsgemäßen Ofen lediglich das Transportsystem für das keramische Gut (Fliesen 1) dargestellt. Nicht veranschaulicht sind das tunnelartige Gehäuse des Ofens, die Einrichtungen zur Beheizung des Ofens, zur Be- und Entladung des Transportsystems sowie zur Rückführung der Brennhilfsmittel (d. h. der noch näher zu erläuternden Auflageelemente).

Der Ofen ist in mehrere Zonen unterteilt, durch die das keramische Gut nacheinander hindurchgeführt wird, beispielsweise eine Aufwärmzone 2, eine Brennzone 3 und eine Kühlzone 4.

Der Transport des Gutes erfolgt durch eine Anzahl von rotierenden Tragelementen 5, die durch Walzen oder Rollen gebildet werden und in seitlichen Schienen 6, 7 des Gehäuses gelagert sind. Wie sich aus Fig. 1 ergibt, ist der Abstand benachbarter Tragelemente 5 in der Brennzone 3 kleiner als in der Aufwärmzone 2 und in der Kühlzone 4. Zumindest einzelne der rotierenden Tragelemente 5 sind angetrieben ; die Antriebseinrichtungen hierfür sind nicht veranschaulicht.

Auf den rotierenden Tragelementen 5 liegen Auflageelemente 8 auf, die als langgestreckte Auflageprofile ausgebildet sind und quer zur Transportrichtung (Pfeil 9) einen lichten Abstand voneinander aufweisen.

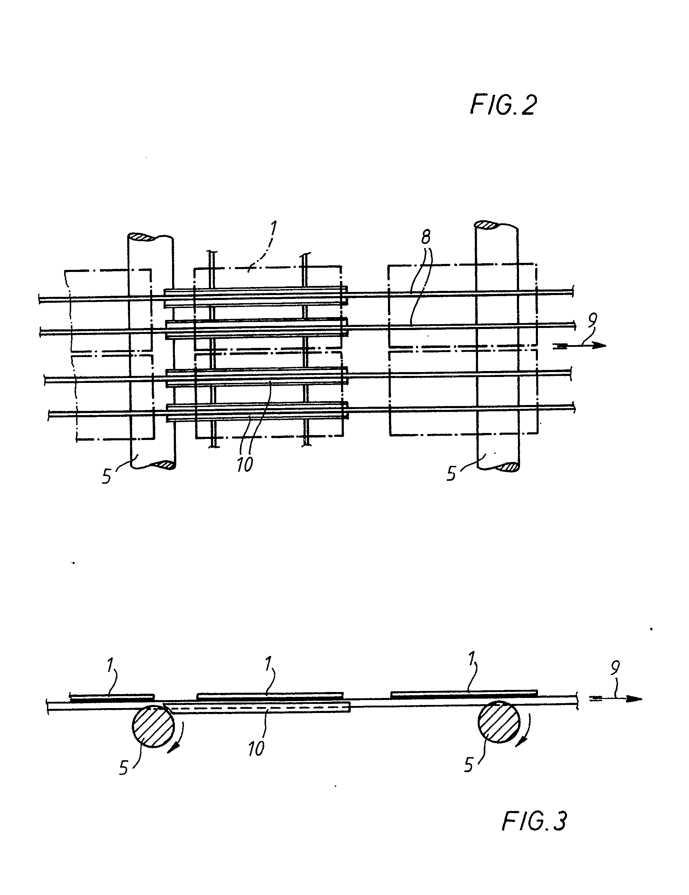

Wie aus den Fig. 2 und 3 hervorgeht, sind zwischen aufeinanderfolgenden rotierenden Tragelementen 5 Führungsschienen 10 angeordnet, durch die die Auflageelemente 8 in Transportrichtung (Pfeil 9) geführt sind. Wie Fig. 3 erkennen läßt, liegt die Oberkante dieser Führungsschienen 10 etwas tiefer als die Oberkante der Auflageelemente 8, so daß das zu brennende Gut (Fliesen 1), das auf den Auflageelementen 8 ruht, die Führungsschienen 10 nicht berührt.

Bei dem in den Fig. 2 und 3 dargestellten Ausführungsbeispiel liegt jede Fliese 1 auf zwei Auflageelementen 8 auf. Im Hinblick auf die schmale Ausbildung der langgestreckten Auflageelemente 8 ist daher auch der größte Teil der Grundfläche der Fliese 1 für eine Beheizung von unten zugänglich.

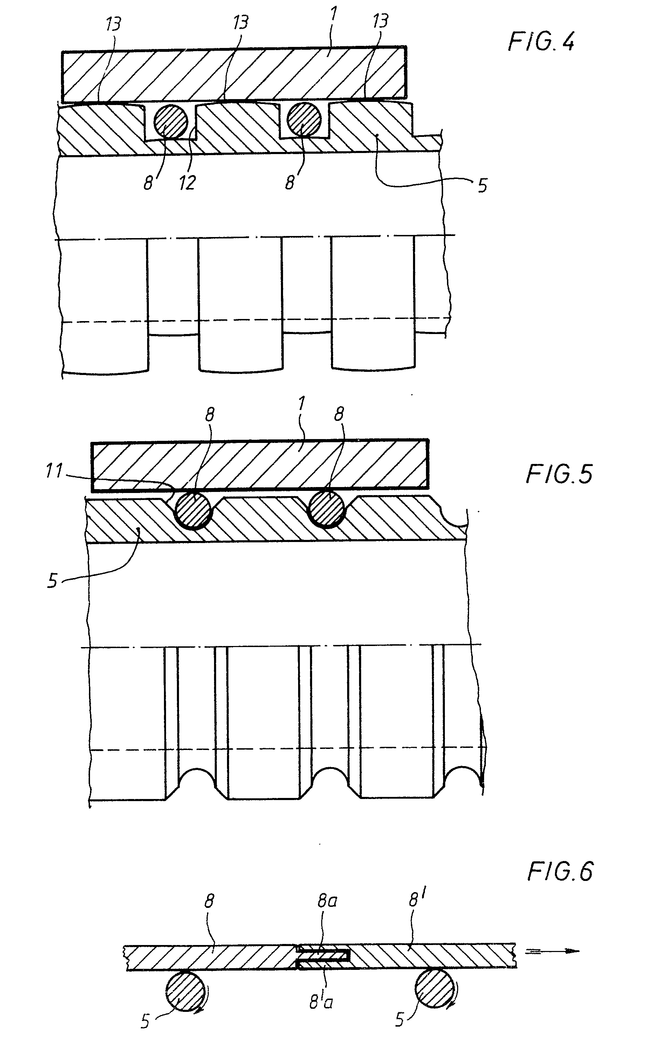

Die Fig. 4 und 5 veranschaulichen zwei Varianten zur Erzielung einer ausreichenden Auflagefläche für das Gut in der Zone höchster Temperatur (Brennzone 3). Gemäß Fig. 5 liegt das Gut (Fliesen 1) auch in der Brennzone 3 ausschließlich auf den Auflageelementen 8 auf (die hier als Stäbe von kreisförmigem Querschnitt ausgebildet sind). Die rotierenden Tragelemente 5 sind zur Führung der Auflageelemente 8 mit Führungsrillen 11 versehen, deren Tiefe so bemessen ist, daß die Oberkante der Auflageelemente 8 höher als der Umfang der Tragelemente 5 liegt. Diese Lösung, bei der somit die Auflageelemente 8 das zu brennende Gut über die gesamte Länge des Ofens ausschließlich abstützen, ist für Brenngut geeignet, bei dem während des Brandes keine Verformung durch das Eigengewicht außerhalb der Auflagefläche eintritt. Dies ist insbesondere beim Zweit- und Drittbrand von keramischen Fliesen der Fall.

Fig. 4 veranschaulicht demgegenüber eine Lösung für Brenngut, das sich während des Brandes in der Zone höchster Temperatur unter der Wirkung des eigenen Gewichtes außerhalb der Auflagefläche verformen kann (dies ist beispielsweise beim Einbrand keramischer Fliesen der Fall). Hier wird im Bereich der Brennzone 3 die Auflagefläche für das Gut durch die Tragelemente 5 gebildet, und zwar im Bereich zwischen benachbarten Auflageelementen 8. Zu diesem Zweck sind die Tragelemente 5 mit Führungsrillen 12 versehen, deren Tiefe größer als die Höhe der Auflageelemente 8 ist. Infolgedessen liegt das Gut (Fliesen 1) im Bereich dieser Zone höchster Temperatur auf dem Umfang 13 der rotierenden Tragelemente 5 auf. Durch eine genügend enge Anordnung aufeinanderfolgender Tragelemente 5 in dieser Brennzone 3 wird auch in Transportrichtung eine ausreichende Unterstützungsfläche für das zu brennende Gut geschaffen. In diesem Falle können die Tragelemente zweckmäßig mit Profilierungen zur Mitnahme des Gutes versehen sein.

Fig. 6 veranschaulicht schematisch die Kupplung aufeinanderfolgender Auflageelemente über ihre nach Art einer Steckverbindung ausgebildeten Enden 8a, 8'a. Diese Steckverbindung ist zugleich so gestaltet, daß sie einer Durchbiegung der verbundenen Auflageelemente 8, 8' unter der Wirkung des Eigengewichts des Brenngutes entgegenwirkt.

Im Rahmen der Erfindung sind noch verschiedene weitere Varianten möglich.

So können die Auflageelemente als Hohlprofile mit beliebiger Querschnittsform ausgebildet werden, um in den einzelnen Zonen des Ofens eine rasche Aufheizung bzw. eine Abkühlung der Auflageelemente zu erreichen.

Auf den rotierenden Tragelementen können Hülsen von etwas größerem Durchmesser frei drehbar angeordnet und zur eventuellen Abstützung des Gutes verwendet werden (wobei diese Hülsen bei einer Auflage des Gutes durch reibschlüssigen Kontakt mit dem Gut gedreht werden, und zwar eventuell mit einer Differenzgeschwindigkeit gegenüber den rotierenden Tragelementen).

Zwischen benachbarten Auflageelemente

kann — insbesondere, wenn die Auflageelemente durch Querstege verbunden sind — ein Netz aus wärmebeständigem Material (z. B. aus Metall oder keramischen Fasern) vorgesehen werden, um Kleinteile des zu brennenden Gutes aufzunehmen.

Die Rückseite des zu brennenden Gutes kann Bestandteil der Führung der Auflageelemente sein. Zu diesem Zweck ist die Rückseite des keramischen Gutes vorteilhaft so profiliert, daß einerseits benachbarte Auflageelemente hierdurch auf Abstand gehalten werden und andererseits das Gut auf den Auflageelementen gegen seitliche Verschiebung gesichert gehalten ist.

**Patentansprüche**

1. Vorrichtung zur Wärmebehandlung von stückigem Gut bei hoher Temperatur, insbesondere zum Brennen von keramischem Gut, enthaltend einen Wärmebehandlungsraum mit einer Anzahl von ortsfest angeordneten, zumindest teilweise angetriebenen, rotierenden Tragelementen und einer Anzahl von auf den Tragelementen aufliegenden, mit dem Gut durch den Wärmebehandlungsraum transportierten Auflageelementen, gekennzeichnet durch folgende Merkmale :

a) Die Auflageelemente (8) sind in Transportrichtung geführte, langgestreckte Auflageprofile, die quer zur Transportrichtung einen lichten Abstand voneinander aufweisen ;

b) in der Zone (3) höchster Temperatur ist eine gegenüber den übrigen Zonen (2, 4) vergrößerte Auflagefläche für das zu behandelnde Gut und/oder ein kleinerer Abstand der rotierenden Tragelemente (5) in Transportrichtung vorgesehen.

2. Vorrichtung nach Anspruch 1, dadurch gekennzeichnet, daß die Auflagefläche für das zu behandelnde Gut in der Zone höchster Temperatur ausschließlich durch die Auflageelemente (8) gebildet wird.

3. Vorrichtung nach Anspruch 1, dadurch gekennzeichnet, daß die Auflagefläche für das zu behandelnde Gut in der Zone höchster Temperatur auschließlich durch rotierende Tragelemente (5) im Bereich des lichten Abstandes zwischen benachbarten Auflageelementen (8) gebildet wird.

4. Vorrichtung nach Anspruch 1, dadurch gekennzeichnet, daß die Auflagefläche für das zu behandelnde Gut in der Zone höchster Temperatur durch die Auflageelemente (8) und die zwischen benachbarten Auflageelementen vorhandenen Umfangsbereiche der rotierenden Tragelemente (5) gebildet wird.

5. Vorrichtung nach Anspruch 1, dadurch gekennzeichnet, daß der lichte Abstand der Auflageelemente (8) ein Mehrfaches ihrer Breite (quer zur Transportrichtung) ist.

6. Vorrichtung nach Anspruch 1, dadurch gekennzeichnet, daß zur Führung der Auflageelemente (8) in Transportrichtung Führungsrillen (11, 12) in den Tragelementen (5) vorgesehen sind.

7. Vorrichtung nach Anspruch 1, dadurch gekennzeichnet, daß zur Führung der Auflageelemente in Transportrichtung im Bereich zwischen in Transportrichtung aufeinanderfolgenden Tragelementen (5) ortsfeste Führungselemente (10) vorgesehen sind, deren Oberkante tiefer als die Oberkante der Auflageelemente (8) liegt.

8. Vorrichtung nach den Ansprüchen 3 und 6, dadurch gekennzeichnet, daß die Tiefe der Führungsrillen im Bereich der Zone höchster Temperatur größer und in den übrigen Zonen kleiner als die Höhe der Auflageelemente (8) ist.

9. Vorrichtung nach den Ansprüchen 3 und 6, dadurch gekennzeichnet, daß in der Zone höchster Temperatur wenigstens zwischen einzelnen, mit Führungsrillen versehenen Tragelementen (5) Förderelemente zum Antrieb der Auflageelemente (8) vorgesehen sind, wobei der Abstand aufeinanderfolgender Förderelemente höchstens gleich der halben Länge der Auflageelemente ist.

10. Vorrichtung nach Anspruch 1, dadurch gekennzeichnet, daß die Enden (8a, 8'a) der Auflageelemente (8, 8') als in Transportrichtung lose ineinanderschiebbare, einer Durchbiegung entgegenwirkende Steckverbindungsenden ausgebildet sind.

11. Vorrichtung nach Anspruch 1, dadurch gekennzeichnet, daß der lichte Abstand zwischen benachbarten Auflageelementen (8) zur Anpassung an die Breite des zu behandelnden Gutes einstellbar ist.

12. Vorrichtung nach Anspruch 1, dadurch gekennzeichnet, daß die Antriebsgeschwindigkeit der angetriebenen Tragelemente (5) in den einzelnen Zonen so gewählt ist, daß die Auflageelemente (8) über die gesamte Länge des Wärmebehandlungsraumes unter einem in Transportrichtung wirkenden Druck in kraftschlüssiger Verbindung stehen.

13. Vorrichtung nach Anspruch 1, dadurch gekennzeichnet, daß quer zur Transportrichtung benachbarte Auflageelemente (8) in Transportrichtung unabhängig voneinander beweglich sind.

14. Vorrichtung nach Anspruch 1, dadurch gekennzeichnet, daß die miteinander in Berührung kommenden Flächen der Auflageelemente (8) und der angetriebenen Tragelemente (5) einen Reibbelag und/oder eine Formschluß-Profilierung aufweisen.

15. Vorrichtung nach Anspruch 1, dadurch gekennzeichnet, daß die Auflageelemente (8) an ihrer Oberseite eine zur Abstützung und/oder zur Mitnahme des Gutes dienende Profilierung aufweisen, die vorzugsweise durch in wählbarer Lage angeordnete Vorsprünge gebildet wird.

16. Vorrichtung nach Anspruch 1, dadurch gekennzeichnet, daß die Auflageelemente (8) aus einem in der Zone höchster Temperatur ausreichend formbeständigen, korrosionsfesten und verzunderungsfreien Werkstoff bestehen.

**Claims**

1. Apparatus for heat treatment of lump material at high temperature, especially for firing ceramic material, containing a heat treatment chamber with a number of rotating carrier elements which are arranged fixed and at least partially driven and a number of support elements which rest on said carrier elements and are transported through the heat treatment chamber with the material, characterised by the following features :

a) the support elements (8) are elongated support sections which are guided in the transport direction and are spaced from one another transversely to the transport direction ;

b) in the zone (3) of highest temperature the support surface for the material to be treated is increased compared with the other zones (2, 4) or the distance of the rotating carrier elements (5) in transport direction is decreased.

2. Apparatus according claim 1, characterised in that the support surface for the material to be treated in the zone of highest temperature is formed exclusively by the support elements (8).

3. Apparatus according claim 1, characterised in that the support surface for the material to be treated in the zone of highest temperature is formed exclusively by rotating carrier elements (5) in the region of the clear distance between adjacent support elements (8).

4. Apparatus according claim 1, characterised in that the support surface for the material to be treated in the zone of highest temperature is formed by the support elements (8) and by the peripheral region of the rotating carrier elements (5) between adjacent support elements (8).

5. Apparatus according claim 1, characterised in that the clear distance between the support elements (8) is a multiple of their width (transversely to the transport direction).

6. Apparatus according claim 1, characterised in that guide grooves (11, 12) are provided in the carrier elements (5) to guide the support elements (8) in the transport direction.

7. Apparatus according claim 1, characterised in that fixed guide elements (10) are provided in the region between successive carrier elements (5) to guide the support elements in the transport direction, the upper edge of said guide elements being provided lower than the upper edge of the support elements (8).

8. Apparatus according claims 3 and 6, characterised in that the depth of the guide grooves in the region of the zone of highest temperature is greater and in the other zones is less than the height of the support elements (8).

9. Apparatus according claims 3 and 6, characterised in that for driving the support elements (8) conveyor elements are provided in the zone of highest temperature at least between individual carrier elements (5) provided with guide grooves, the distance between successive conveyor elements being at most equal to half the length of the support elements.

10. Apparatus according claim 1, characterised in that the ends (8a, 8'a) of the support elements (8, 8') are constructed as plug connection ends which are telescopic in the direction of transport and counteract bending.

11. Apparatus according claim 1, characterised in that the clear spacing between adjacent support elements (8) is adjustable for adaptation to the width of the material to be treated.

12. Apparatus according claim 1, characterised in that the drive speed of the driven carrier elements (5) in the individual zones is selected so that over the whole length of the heat treatment chamber the support elements (8) are under a slight pressure acting in the transport direction and are thus in force-locking connection.

13. Apparatus according claim 1, characterised in that support elements (8) which are adjacent transversely to the transport direction are movable independently of one another in the transport direction.

14. Apparatus according claim 1, characterised in that the surfaces of the support elements (8) and the driven carrier elements (5) which come into contact with one another are provided with a friction coating and/or with a form locking profile.

15. Apparatus according claim 1, characterised in that the upper side of the support elements (8) is provided with a profile for supporting and/or conveying the material, said profile preferably being formed by projections arranged in a selectable position.

16. Apparatus according claim 1, characterised in that the support elements (8) are made from a material which is sufficiently stable in shape, resistant to corrosion and free of scaling in the zone of highest temperature.

**Revendications**

1. Dispositif de traitement thermique d'un produit en pièces à température élevée, en particulier de cuisson de produit céramique, comprenant une chambre de traitement comportant plusieurs éléments porteurs rotatifs montés en position fixe et dont au moins certains sont commandés, ainsi que plusieurs éléments porte-pièces reposant sur les éléments porteurs et transportés avec le produit le long de la chambre de traitement, dispositif caractérisé par les particularités suivantes :

a) les éléments porte-pièces (8) sont des profilés allongés, guidés dans la direction du transport et situés à distance les uns des autres perpendiculairement à la direction du transport ;

b) la surface de soutien du produit traité est plus grande et/ou la distance séparant les éléments porteurs rotatifs (5) dans la direction du transport est plus petite dans la zone (3) à température maximale que dans les autres zones (2, 4).

2. Dispositif selon la revendication 1, caractérisé en ce que la surface de soutien du produit traité est formée exclusivement par les éléments porte-pièces (8) dans la zone à température maximale.

3. Dispositif selon la revendication 1, caractérisé en ce que la surface de soutien du produit traité est formée dans la zone à température maximale exclusivement par des éléments porteurs rotatifs (5) se trouvant à l'intérieur de l'espace compris entre les éléments porte-pièces voisins (8).

4. Dispositif selon la revendication 1, caractérisé en ce que la surface de soutien du produit traité est formée dans la zone à température maximale par les éléments porte-pièces (8) et par la circonférence des éléments porteurs rotatifs (5) se trouvant entre les éléments porte-pièces voisins.

5. Dispositif selon la revendication 1, caractérisé en ce que la distance séparant les éléments porte-pièces (8) correspond à un multiple de leur largeur (perpendiculairement à la direction de transport).

6. Dispositif selon la revendication 1, caractérisé en ce que des gorges (11, 12) de guidage des éléments porte-pièces (8) dans la direction du transport sont prévues dans les éléments porteurs (5).

7. Dispositif selon la revendication 1, caractérisé en ce que des éléments fixes (10), dont le bord supérieur se trouve à un niveau plus bas que le bord supérieur des éléments porte-pièces (8), sont prévus pour le guidage de ces derniers dans la direction du transport dans la région comprise entre les éléments porteurs (5) qui se succèdent dans la direction du transport.

8. Dispositif selon les revendications 3 et 6, caractérisé en ce que la profondeur des gorges de guidage est plus grande à l'intérieur de la zone à température maximale et plus petite dans les autres zones que la hauteur des éléments porte-pièces (8).

9. Dispositif selon les revendications 3 et 6, caractérisé en ce que des éléments transporteurs destinés à entraîner les éléments porte-pièces (8) sont prévus dans la zone à température maximale, au moins entre certains des éléments porteurs (5) comportant des gorges de guidage, la distance séparant les éléments transporteurs successifs étant au maximum égale à la moitié de la longueur des éléments porte-pièces.

10. Dispositif selon la revendication 1, caractérisé en ce que les extrémités (8a, 8'a) des éléments porte-pièces (8, 8') sont conformées en embouts télescopiques s'emmanchant librement dans la direction du transport et tendant à empêcher la flexion.

11. Dispositif selon la revendication 1, caractérisé en ce que la distance séparant les éléments porte-pièces voisins (8) est réglable afin d'être adaptable à la largeur du produit devant être traité.

12. Dispositif selon la revendication 1, caractérisé en ce que la vitesse d'entraînement des éléments porteurs commandés (5) est adoptée dans les différentes zones de manière que les éléments porte-pièces (8) soient maintenus de façon à être étroitement reliés en subissant une pression s'exerçant dans la direction du transport sur la longueur totale de la chambre de traitement thermique.

13. Dispositif selon la revendication 1, caractérisé en ce que les éléments porte-pièces (8) qui sont voisins perpendiculairement à la direction du transport sont mobiles les uns par rapport aux autres dans cette direction de transport.

14. Dispositif selon la revendication 1, caractérisé en ce que les surfaces des éléments porte-pièces (8) et des éléments porteurs commandés (5) qui entrent en contact les unes avec les autres comportent un garnissage d'adhérence et/ou un profilage à formes complémentaires.

15. Dispositif selon la revendication 1, caractérisé en ce que les éléments porte-pièces (8) comportent du côté supérieur un profilage destiné au soutien et/ou à l'entraînement du produit et formé de préférence de saillies disposées en positions sélectionnables.

16. Dispositif selon la revendication 1, caractérisé en ce que les éléments porte-pièces (8) sont en un matériau dont la stabilité de forme et la résistance à la corrosion et à l'oxydation sont suffisantes dans la zone à température maximale.

FIG.1

*FIG.2*

*FIG.3*

FIG. 4

FIG.5

FIG.6

3